# EUROPEAN PATENT APPLICATION

(11) **EP 1 862 358 A1**
(43) Date of publication of application: **05.12.2007**
(21) Application number: 07010393.2
(22) Date of filing: 24.05.2007
(51) Int. Cl.: B60R 21/00

(54) **Vehicle occupant detection device**

(30) Priority: 29.05.2006 JP 2006148887
(71) Applicant: HONDA MOTOR CO., LTD., Tokyo 107-8556 (JP)
(72) Inventor: Yoshifuku, Masashi, Wako-shi Saitama (JP); Kumakiri, Naotaka, Wako-shi Saitama (JP); Furukawa, Takashi, Wako-shi Saitama (JP)
(74) Representative: Trossin, Hans-Jürgen

(57) **Abstract**

A vehicle occupant detection device (10) includes light-receiving elements (CMOS element 33) for receiving light from a vehicle interior, and a signal processing part (12) for processing a signal detected by the light detecting elements. A vehicle occupant in the vehicle interior is detected by the signal detecting part on the basis of an image signal obtained by the light-receiving elements. The vehicle occupant detection device has a band-pass filter (35), which has a frequency range whose transmission band (52) is substantially the same as a sunlight absorption spectrum band (62), and in which a wavelength of the light received by the light-receiving element is selected according to the transmission band. An object that is to be detected and is present in the vehicle interior is accordingly imaged/detected by the vehicle occupant detection device using a certain wavelength region of near infrared light, and decreases in contrast in relation with sunlight are eliminated.

## Description

The present invention relates generally to a vehicle occupant detection device and, in particular, to a vehicle occupant detection device for detecting, e.g., an orientation or body frame of a driver or other occupant in a vehicle interior.

A vehicle occupant detection device is a device for detecting a driver or other vehicle occupant present in a vehicle interior. In a vehicle occupant detection device, a camera is generally provided on part of a rearview mirror provided to an upper edge of a front side of the vehicle interior. An image of the vehicle interior is captured from diagonally above the front side, and the vehicle occupant is detected and monitored.

Conventionally, 870 nm is well-known as a light reception wavelength for the camera used in the vehicle occupant detection device. A standard for selecting the wavelength of light received by the camera is generally selected on the basis of a relationship between an invisible wavelength and the sensitivity toward received light of a CMOS element or CCD element that acts as the light-receiving element used in the camera. It is for this reason that a wavelength of 870 nm is often used as the light reception wavelength.

Light having a wavelength of 870 nm is visible light and can actually be seen by a driver. Such light may therefore have an effect on the driver while driving. In order to prevent the light from entering the eyes of the driver, an element for generating a wavelength higher than about 900 nm must be used for the light-receiving element. Light in a frequency range having a higher wavelength than about 900 nm is in a near infrared region. Sunlight contains a large amount of light having a wavelength in the near infrared region. Therefore, when an element that generates light in this wavelength region is used, the light may be obscured by sunlight and will be greatly affected by sunlight, and the detecting ability will be adversely affected. The wavelength can be increased to an infrared region. However, in such instances, the sensitivity of a common CMOS element will decrease. Therefore, a problem will arise in that a detected image of suitable quality will be impossible to acquire. Temperature may also have an effect.

An on-board camera device disclosed in JP 2001-57676 A is presented as related prior art. The on-board camera device is provided with an infrared light filter that can change the amount of infrared light transmitted to a front of an imaging element. The on-board camera device has a configuration in which the amount of transmitted infrared light, including light from an object to be photographed incident on the imaging element, is adjusted by the infrared light filter. Accordingly, an image close to coloring viewed by a human eye can be obtained when an image is captured at a bright location, and an image can be captured while night vision is enhanced when an image is captured in a dark location.

An object of the light reception wavelength of the camera used in the vehicle occupant detection device is also to prevent the contrast from decreasing in regions where interference occurs between visible light and infrared light, eliminate the necessity of improvements to the output and sensitivity of the light-generating element, and eliminate increases in the cost of producing the detecting device.

Therefore, it is desirable that a vehicle occupant detection device be introduced in which an object to be detected that is present in a vehicle interior is imaged/detected using a certain wavelength region of near infrared light; in which decreases in contrast in relation to sunlight are eliminated; and which can be produced using a light-generating element having the output characteristics and sensitivity characteristics of conventional elements so as not to add extra costs that are unnecessary for the detection device.

According to the present invention, there is provided a vehicle occupant detection device that comprises a light-receiving element for receiving light from a vehicle interior and signal processing means for processing a signal detected by the light-receiving element, and that detects, based on an image signal obtained using the light-receiving element, a vehicle occupant in the vehicle interior via the signal processing means, the vehicle occupant detection device further comprising: a band-pass filter, which has a frequency range whose transmission band is substantially the same as a sunlight absorption spectrum band, and in which a wavelength of the light received by the light-receiving element is selected according to the transmission band.

In the vehicle occupant detection device, the light-receiving element of a camera is provided with a band-pass filter for transmitting only light in a wavelength band present as an absorption band in the spectrum of sunlight. It is possible to selectively capture an image selectively in the wavelength band in which sunlight is attenuated and reduce the effects of sunlight.

Preferably, the vehicle occupant detection device comprises auxiliary light projection means for emitting auxiliary light onto an object to be detected, wherein a wavelength region of the auxiliary light is set to a near infrared region. In this arrangement, the near infrared region is used to illuminate an object by using light in the wavelength region in which sunlight attenuates, whereby the effects of sunlight can be reduced.

Desirably, the wavelength region of the auxiliary light matches the transmission band of the band-pass filter.

In a preferred form, the light-receiving element is a camera, and the band-pass filter can be provided to a lens of the camera: A configuration may be adopted in which a plurality of cameras is provided and the cameras are disposed in an integrated structure. The wavelength region of the transmission band of the band-pass filter is preferably set near 937 nm.

According to the present invention, the band-pass filter that transmits only light in the wavelength band that is in an absorption band in the spectrum of sunlight is provided to the light-receiving element of the camera in the camera-equipped vehicle occupant detection device. Therefore, an image can be selectively captured in the wavelength band in which sunlight is attenuated, and the effects of sunlight can be dramatically reduced. In addition, the light-generating element generates light that has a certain wavelength region of near infrared light, which contains little sunlight, and the object to be detected in the vehicle interior is imaged/detected. Therefore, decreases in contrast in relation to sunlight are eliminated, and the effects of sunlight can be dramatically reduced. Furthermore, a light-generating element having the same output characteristics and sensitivity characteristics as the prior art can be used, the device does not require the addition of unnecessary costs, and the effects of sunlight can be dramatically reduced.

Certain preferred embodiments of the present invention will be described in detail below, by way of example only, with reference to the accompanying drawings, in which:
FIG. 1 is a block diagram showing an overall configuration of a vehicle occupant detection device according to the present invention;
FIG. 2 is a front view of a camera unit used in the vehicle occupant detection device;
FIG. 3 is a plan view of the camera unit used in the vehicle occupant detection device;
FIG. 4 is a side view of the camera unit used in the vehicle occupant detection device;
FIG. 5 is a schematic view showing the arrangement of major parts of one camera of the camera unit;
FIG. 6 is a schematic view showing an actual state in which the camera unit in the vehicle interior is installed; and
FIG. 7 is a graph describing a relationship between spectrum characteristics of light contained in sunlight, a transmission band of light selected/set by a filter, and a wavelength region of light output from an LED.

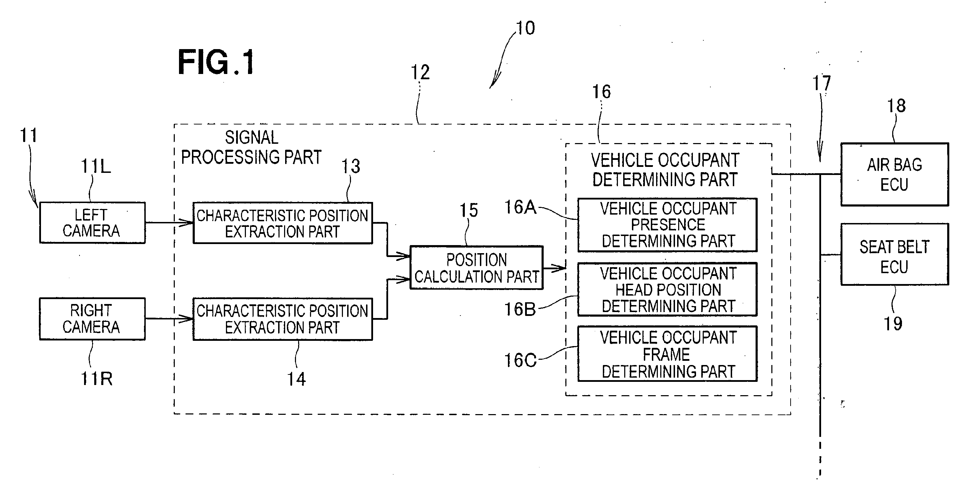

As shown in FIG. 1, the system of a vehicle occupant detection device 10 comprises a camera 11 and a signal processing part 12 as a system configuration. Preferably, the camera 11 is composed of a right camera 11R and a left camera 11L and has a multi-eye stereo camera unit configuration. The camera unit including the camera 11 comprises a light-receiving element as the camera 11, and a plurality of light-generating elements (LED) described below. The camera unit is configured as a light-generating/light receiving unit. The signal processing part 12 is usually configured as a camera unit ECU attached to the camera 11. The signal processing part 12 can be prepared independently from the configuration of the camera 11.

When a single-eye camera configuration or a beam-type sensor configuration is used, one camera and the signal processing part associated with the camera are omitted.

A CMOS element or other light-receiving element is used for both the right camera 11R and the left camera 11L.

The signal processing part 12 comprises characteristic position extracting parts 13, 14 that correspond to the right camera 11R and left camera 11L, respectively; a position calculating part 15 for calculating positional data of the object to be detected on the basis of an image signal according to a characteristic position output from the two characteristic position extracting parts 13, 14; and a vehicle occupant determining part 16. The characteristic position extracting parts 13, 14 function to extract, as positional data, characteristics of the object to be detected (vehicle occupant) from the image signal obtained using the images of the right camera 11R and left camera 11L. Examples of characteristics of the object to be detected include a head part of the vehicle occupant and a body frame of the vehicle occupant. The position calculating part 15 calculates the characteristic position of the object to be detected (vehicle occupant) from the image signal from the right and left cameras 11R, 11L. The vehicle occupant determining part 16 has a vehicle occupant presence determining part 16A, a vehicle occupant head part position determining part 16B, and a vehicle occupant body frame determining part 16C. The presence of the vehicle occupant, the position of the head part of the vehicle occupant, and the body frame of the vehicle occupant are determined in the vehicle occupant determining part 16 by the vehicle occupant presence determining part 16A, the vehicle occupant head part position determining part 16B, and the vehicle occupant body frame determining part 16C, respectively, on the basis of the characteristics signal that is output from the position calculating part 15 and relates to the object to be detected.

The determining signal output from the signal processing part 12 is provided to a main control device (not shown) via an in-vehicle network (CAN) 17. An, e.g., airbag ECU 18 and seat belt ECU 19 are connected to the in-vehicle network 17 as other connected elements.

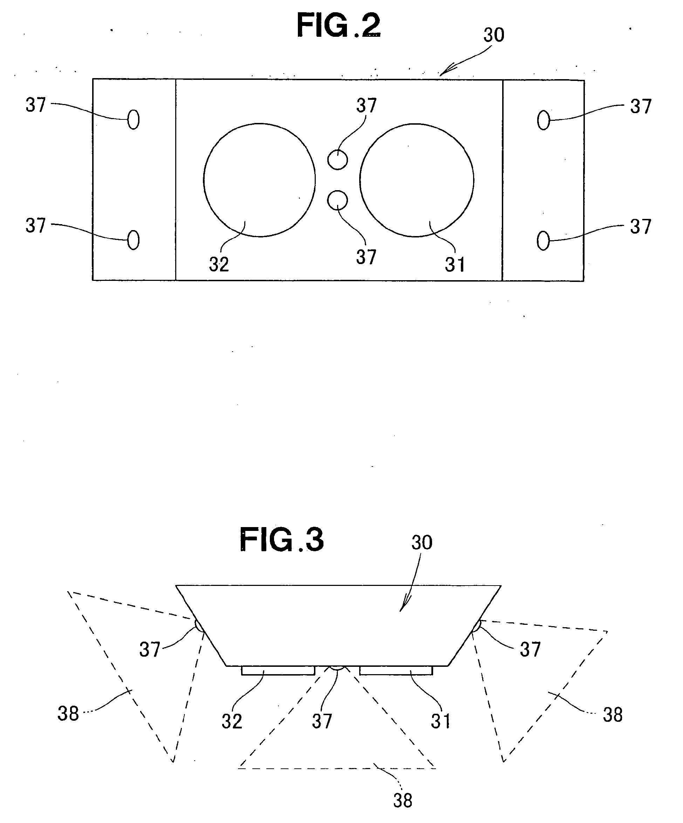

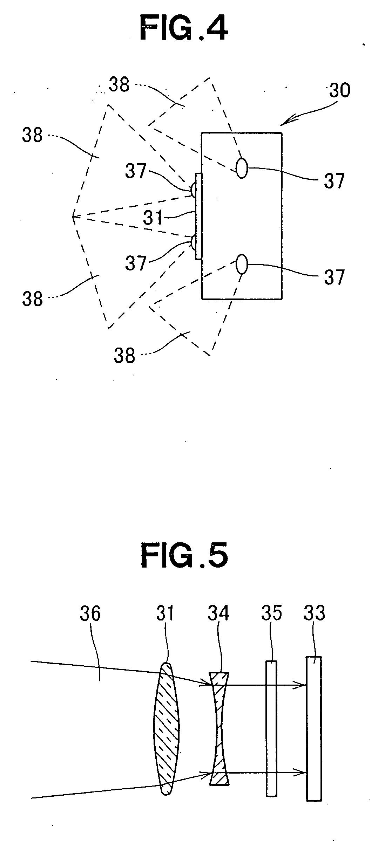

The abovementioned camera unit shall be described next with reference to FIGS. 2 through 5.

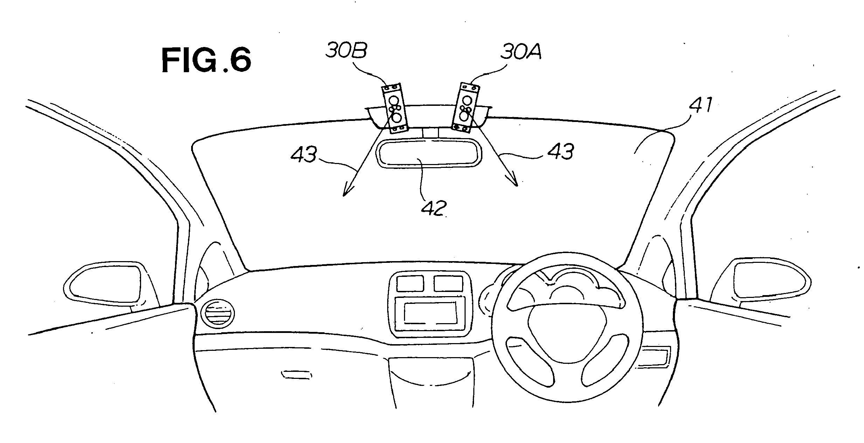

The camera unit 30 comprises the above-described right camera 11R and left camera 11L. In FIG. 2, reference symbol 31 indicates a lens for the right camera 11R, and reference symbol 32 indicates a lens for the left camera 11L. FIG. 5 shows an example of an internal structure of the right camera 11R. The right camera 11R is composed of a light-receiving element formed from a CMOS element 33. A concave lens 34 and a filter 35 are disposed between the lens 31 and CMOS element 33. The filter 35 is linked to the lenses of the right camera 11R and is disposed on the inside of the lenses. Light 36 that reaches and strikes the camera unit 30 from the front passes through the lens 31, concave lens 34, and filter 35 in the stated order, and then strikes a light receiving surface of the CMOS element 33. The light 36 passes through the concave lens 34 and becomes parallel light, perpendicularly strikes an incident surface of the filter 35, passes through the filter 35, and perpendicularly strikes a light receiving surface of the CMOS element 33. An internal structure of the left camera 11L is the same as the structure shown in FIG. 5. In the internal structures of the left and right cameras 11R, 11L, the filter 35 disposed at a position on a front surface of the CMOS element 33 has the following filtering characteristics.

Six light-generating elements (LEDs) 37, e.g., are provided to the camera unit 30 in addition to the left and right cameras 11R, 11L. The six LEDs 37 are arranged so that there are two LEDs on a front surface for emitting light in the vertical direction, two LEDs on a right side surface for emitting light in the vertical direction, and two LEDs on a right side surface for emitting light in the vertical direction. Ranges 38 indicated by a broken lines in FIGS. 2 and 3 indicate ranges in which the six LEDs 37 emit light. The six LEDs 37 thus each have an individual range 38 for emitting light. The six LEDs 37 may continuously emit light or may intermittently emit light (in a strobe-like fashion). The wavelength region of light emitted from the LEDs 37 has the following characteristics.

FIG. 6 shows an image of a state in which the camera unit 30 is attached. FIG. 6 is a view as seen from the vehicle interior in a forward facing direction. In this example of attachment, two camera units 30A, 30B are used and are disposed in the vicinity of a rearview mirror 42 provided to an upper edge of a front window 41. The first camera unit 30A is attached so as to detect a driver in a driver's seat. The second camera unit 30B is attached so as to detect a vehicle occupant in a passenger's seat. The two camera units 30A, 30B are disposed in a longitudinal state and are attached facing the driver's seat and passenger's seat, respectively. In FIG. 6, arrows 43 indicate examples of directions in which light is emitted from the two LEDs 37 attached to the front surface.

Descriptions shall next be given of filtering characteristics of the filter 35 disposed on the front surface position of the CMOS element 33 that is the light-receiving element, and of the wavelength region of light emitted from the LEDs 37 that are the light-generating elements.

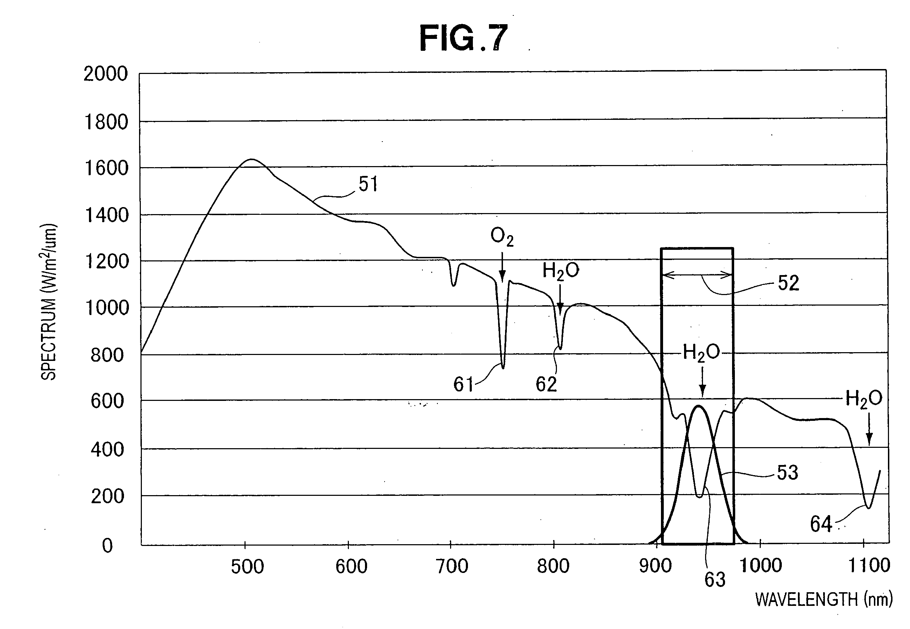

FIG. 7 shows spectrum characteristics 51 of light contained in sunlight, a light transmission band 52 selected/set by the filter 35, and a wavelength region 53 of light output from the LEDs 37. The spectrum characteristics 51 of light contained in sunlight that reaches ground level have a broad frequency range from about 400 nm to about 1100 nm. A plurality of absorption spectrum wavelengths forming valleys is contained in the wide spectrum characteristics 51 of the light included in sunlight. A first wavelength 61 is a wavelength absorbed by O₂, a second wavelength 62 is a wavelength absorbed by H₂O, a third wavelength 63 is another wavelength absorbed by H₂O, and a fourth wavelength 64 is yet another wavelength absorbed by H₂O.

The filter 35 according to the present embodiment is a band-pass filter. The transmission band 52 of the filter is selected or set to match the frequency range that includes the third wavelength 63. The wavelength region 53 of light generated by the LEDs 37 according to the present embodiment is selected or set to match the frequency range that includes the third wavelength 63.

The wavelength region 53 of light emitted from the LEDs 37 is matched to the frequency range that includes the third wavelength 63, whereby the light from the LEDs 37 is not obscured by sunlight, and light of a higher intensity than sunlight can be detected. The transmission band 52 of the filter 35 is matched to the frequency range that includes the third wavelength 63, whereby light of a wavelength not obscured by sunlight can be transmitted and received by the CMOS element 33.

The frequency range that includes the third wavelength 63 is a wavelength band near 937 nm that corresponds to the H₂O absorption spectrum and is a near infrared wavelength band. The wavelength band of light received by the CMOS element 33 is set by the filter 35 to the frequency range 52 that includes the third wavelength 63, and the wavelength band of light output by the six LEDs 37 is set to the frequency range 53 that includes the third wavelength 63, whereby the vehicle occupant detection device 10 can detect a vehicle occupant without being affected by sunlight. The vehicle occupant detection device 10 can obtain an image signal from the CMOS element 33 during daytime without being affected by sunlight, and a uniform image can be obtained. Similarly, during night time, illumination necessary to capture an image can be maintained using the light-emitting action of the LEDs 37, and a uniform image can be obtained.

According the above-described vehicle occupant detection device 10 of the present embodiment, the LEDs 37 are made to generate light in a wavelength band that forms valleys (absorption bands) in the spectrum characteristics 51 of sunlight, and an image is captured. The effects of sunlight on the detection of the light can thereby dramatically be reduced. According to a stereo camera configuration, errors in distance calculations resulting from differences in the way in which reflected sunlight strikes the left and right cameras 11R, 11L can be reduced.

In the above-described embodiment, the filtering characteristics of the filter 35 and the light-generating characteristics of the LEDs 37 were set to a frequency range that includes the third wavelength 63. However, a frequency range can also be selected and set that includes, e.g., the first wavelength 61 or the second wavelength 62.

A vehicle occupant detection device (10) includes light-receiving elements (CMOS element 33) for receiving light from a vehicle interior, and a signal processing part (12) for processing a signal detected by the light detecting elements. A vehicle occupant in the vehicle interior is detected by the signal detecting part on the basis of an image signal obtained by the light-receiving elements. The vehicle occupant detection device has a band-pass filter (35), which has a frequency range whose transmission band (52) is substantially the same as a sunlight absorption spectrum band (62), and in which a wavelength of the light received by the light-receiving element is selected according to the transmission band. An object that is to be detected and is present in the vehicle interior is accordingly imaged/detected by the vehicle occupant detection device using a certain wavelength region of near infrared light, and decreases in contrast in relation with sunlight are eliminated.

## Claims

1. A vehicle occupant detection device (10) that comprises: a light-receiving element (11, 11L, 11R, 33) for receiving light (36) from a vehicle interior; and signal processing means (12) for processing a signal detected by the light-receiving element, and that detects, based on an image signal obtained using the light-receiving element, a vehicle occupant in the vehicle interior via the signal processing means, the vehicle occupant detection device further comprising:
a band-pass filter (35), which has a frequency range whose transmission band (52) is substantially the same as a sunlight absorption spectrum band (62), and in which.a wavelength of the light received by the light-receiving element is selected according to the transmission band.

2. The vehicle occupant detection device of claim 1, further comprising auxiliary light projection means (37) for emitting auxiliary light onto an object to be detected, wherein a wavelength region (53) of the auxiliary light is set to a near infrared region.

3. The vehicle occupant detection device of claim 2, wherein the wavelength region (53) of the auxiliary light matches the transmission band of the band-pass filter (35).

4. The vehicle occupant detection device of claim 1, wherein the light-receiving element (11, 11L, 11R, 33) comprises a camera.

5. The vehicle occupant detection device of claim 4, wherein the band-pass filter (35) is provided to a lens (31, 34) of the camera.

6. The vehicle occupant detection device of claim 4, wherein a plurality of the cameras is provided in the form of an integrated structure.

7. The vehicle occupant detection device of claim 1, wherein the wavelength region of the transmission band of the band-pass filter (35) is set to be near 937 nm.
